# DEMANDE DE BREVET EUROPEEN

(11) **EP 1 914 131 A1**
(43) Date de publication de la demande: **23.04.2008**
(21) Numéro de dépôt: 07118520.1
(22) Date de dépôt: 15.10.2007
(51) Int. Cl.: B60S 1/40

(54) **Connecteur de montage d'un balai d'essuie-glace comportant des moyens de réglage de sa largeur transversale**

(30) Priorité: 20.10.2006 FR 0609226
(71) Demandeur: Valeo Systèmes d'Essuyage, 78321 La Verrière (FR)
(72) Inventeur: Brazi, Karim Valeo Systèmes d'Essuyage, 63400 Issoire (FR)
(74) Mandataire: Rosolen-Delarue, Katell

(57) **Abrégé**

L'invention propose un connecteur (16) de montage d'un balai (10) d'essuie-glace sur une extrémité d'un bras, et comportant deux parties latérales (33) comportant chacune une embase (36) supérieure comportant une face (40) longitudinale verticale située transversalement en vis-à-vis de la face (40) longitudinale verticale de l'autre embase (36) supérieure,
caractérisé en ce que les faces (40) longitudinales verticales en vis-à-vis des deux embases (36) sont situées transversalement à distance l'une de l'autre et en ce qu'au moins une première embase (36) comporte des moyens (44, 46) de réglage de la distance transversale (J1, J2) séparant les deux faces (40) longitudinales verticales, qui sont aptes à coopérer avec la deuxième embase (36).

## Description

L'invention propose un connecteur de montage et d'articulation d'un balai d'essuie-glace sur une extrémité d'un bras d'entraînement du balai.

L'invention propose plus particulièrement un connecteur de montage et d'articulation d'un balai d'essuie-glace d'orientation principale longitudinale sur une extrémité d'un bras d'entraînement du balai, le connecteur étant fixé sur le balai, et comportant deux parties latérales d'orientation principale longitudinale agencées transversalement de part et d'autre du balai, chaque partie latérale comportant une embase supérieure qui est en appui sur une face supérieure du balai, une patte latérale inférieure s'étendant verticalement vers le bas depuis l'embase supérieure associée et portant des moyens de fixation du connecteur au balai, chaque embase supérieure comportant une face longitudinale verticale située transversalement en vis-à-vis de la face longitudinale verticale de l'autre embase supérieure.

Selon une conception consistant à réaliser des balais d'essuie-glace de faible hauteur, la structure articulée du balai d'essuie-glace, qui porte la raclette ou lame d'essuyage est supprimée, et c'est l'association d'une monture de connecteur creuse avec une vertèbre longitudinale de rigidification qui constitue la structure du balai proprement dit.

La monture de connecteur est en forme de tronçon de profilé longitudinal qui comporte un corps tubulaire supérieur à l'intérieur duquel la vertèbre, qui est en forme de lame horizontale longitudinale est reçue. La monture comporte enfin des crochets inférieurs de montage de la raclette d'essuyage.

La vertèbre est réalisée en un matériau élastique, pour permettre de plaquer la raclette d'essuyage contre la surface vitrée à essuyer.

Le balai comporte aussi un connecteur de montage du balai sur un bras d'entraînement du balai dans un mouvement de balayage par rapport à un panneau vitré à essuyer, qui est monté autour du corps de la monture de connecteur, et qui comporte des moyens pour bloquer la vertèbre en mouvement longitudinal en position montée à l'intérieur du corps de la monture de connecteur.

Le connecteur de montage est réalisé en deux parties latérales qui sont jointes l'une avec l'autre au niveau de leurs embases supérieures respectives.

Selon un mode de réalisation connu, les parties latérales sont accolées l'une contre l'autre au niveau des faces longitudinales verticales en vis-à-vis de leurs embases.

De plus, les embases ainsi fixées l'une à l'autre forment une portion permettant le montage du connecteur avec l'extrémité du bras.

Les tolérances dimensionnelles de fabrication des parties latérales sont relativement élevées, du fait de leur mode de fabrication par moulage. Par contre les tolérances dimensionnelles de l'extrémité du bras sont plus réduites.

De plus, un jeu transversal réduit est recommandé entre l'extrémité du bras et le connecteur de montage, pour permettre l'articulation du connecteur par rapport à l'extrémité du bras.

Ainsi, il est possible, lorsque les dimensions des parties latérales sont à leurs dimensions maximales ou minimales de fabrication, que le jeu de montage entre le connecteur et l'extrémité du bras soit nul, ou bien que ce jeu soit trop important.

L'invention a pour but de proposer un connecteur de montage permettant d'adapter la dimension transversale du connecteur à la dimension transversale de l'extrémité du balai, pour corriger les variations dimensionnelles du connecteur de montage.

Dans ce but, l'invention propose un connecteur de montage tel que décrit précédemment, caractérisé en ce que les faces longitudinales verticales en vis-à-vis des deux embases sont situées transversalement à distance l'une de l'autre, et en ce qu'au moins une première embase comporte des moyens de réglage de la distance transversale séparant les deux faces longitudinales verticales, qui sont aptes à coopérer avec la deuxième embase.

Selon d'autres caractéristiques de l'invention :
- au moins la première embase comporte au moins un bossage faisant saillie transversalement par rapport à la face longitudinale verticale, qui est apte à s'appuyer transversalement contre la face longitudinale verticale en vis-à-vis de la deuxième embase et qui est apte à être déformé plastiquement pour le réglage de la distance transversale séparant les deux faces longitudinales verticales ;
- au moins la deuxième embase comporte un poinçon faisant saillie transversalement par rapport à la face longitudinale verticale, qui est apte à provoquer la déformation plastique dudit bossage de la première embase ;
- le dit poinçon de la première embase est apte à être introduit transversalement dans le bossage de la deuxième embase ;
- la première embase comporte une pluralité de bossages répartis sur la face longitudinale verticale et deuxième embase comporte un poinçon associé à chaque bossage de la première embase ;
- chaque embase comporte au moins un bossage et au moins un poinçon qui sont aptes à coopérer avec un poinçon et un bossage associés, respectivement, de l'autre embase ;
- le bossage forme une bande verticale faisant saillie transversalement par rapport à la face longitudinale verticale associée ;
- le poinçon est en forme d'une nervure verticale faisant saillie transversalement par rapport à la face longitudinale verticale associée, dont le bord vertical d'extrémité transversale libre forme une arête vive pour permettre à ladite nervure de pénétrer dans le bossage associé.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un balai d'essuie-glace sur lequel un connecteur de montage conforme à l'invention est destiné à être monté ;
- la figure 2 est une vue de dessus du connecteur de montage représenté à la figure 1, dans laquelle le jeu transversal séparant les faces longitudinales verticales des deux embases est maximal ;
- la figure 3 est une vue similaire à celle de la figure 2, dans laquelle le jeu transversal séparant les faces longitudinales verticales des deux embases est réduit.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

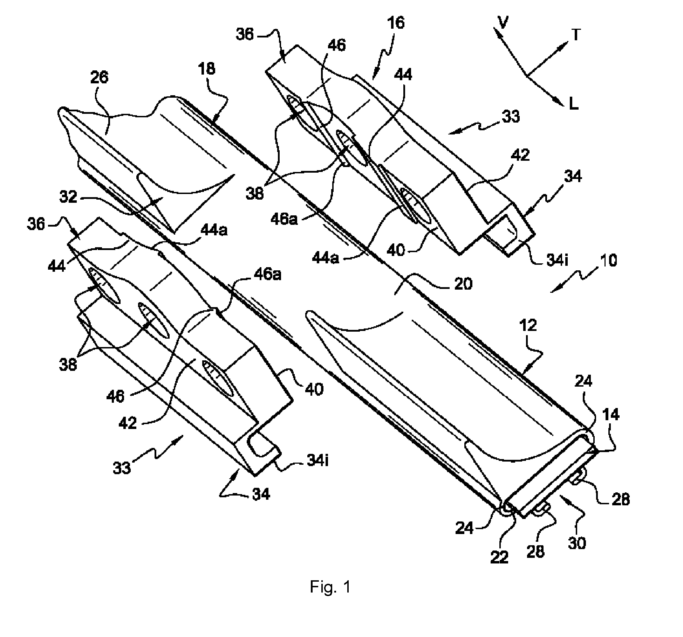

On a représenté à la figure 1 un balai d'essuie-glace 10 de type "flat-blade", qui comporte une monture de support 12 d'orientation principale longitudinale, qui porte les autres composants du balai 10, une vertèbre interne 14 en forme de lame horizontale longitudinale, un connecteur 16 de montage permettant de relier le balai d'essuie-glace 10 à un bras d'entraînement (non représenté) et une raclette inférieure d'essuyage (non représentée).

La monture 12 comporte un corps central 18 tubulaire d'axe principal longitudinal, qui est délimité par une paroi supérieure horizontale 20, une paroi inférieure horizontale 22, et par deux parois latérales longitudinales verticales 24.

La monture 12 comporte aussi une nervure supérieure longitudinale 26, qui s'étend verticalement vers le haut depuis la face supérieure de la paroi supérieure horizontale 20 du corps 18, et qui est conformée aérodynamiquement de manière à générer des efforts d'appui du balai 10 sur la surface vitrée, sous l'action du vent relatif produit par le déplacement du véhicule.

Enfin, la monture de support 12 comporte des moyens inférieurs de montage de la raclette d'essuyage, qui consistent ici en deux crochets inférieurs longitudinaux 28 en vis-à-vis, et qui délimitent un logement tubulaire 30 ouvert vers le bas, dans lequel un dos supérieur complémentaire de la raclette est monté.

La vertèbre 14 constitue l'élément structurel du balai 10, qui rigidifie la monture 12. La vertèbre 14 est réalisée en un matériau relativement rigide, par exemple en acier, et elle consiste en une lame horizontale longitudinale qui est agencée à l'intérieur du corps tubulaire 18.

Le connecteur 16 de montage est monté longitudinalement soit au milieu soit décentré globalement au milieu de la monture 12, en chevauchant le corps 18 de la monture 12, c'est-à-dire qui s'étend au-dessus de la paroi supérieure horizontale 20, et de part et d'autre des parois latérales 24.

La nervure supérieure 26 comporte une ouverture 32 au travers de laquelle le connecteur 16 de montage est monté sur la monture 12.

Le connecteur 16 de montage est formé en deux parties 33 qui sont symétriques par rapport à un plan longitudinal vertical médian du balai 10, et qui sont montées sur le corps 18 de la monture 12 selon un mouvement transversal.

Chaque partie 33 du connecteur 16 de montage comporte une embase supérieure 36 qui est en appui sur la face supérieure de la paroi supérieure horizontale 20 du corps 18 de la monture 12, et qui comporte des moyens 38 de fixation à l'embase supérieure 36 de l'autre partie 33 du connecteur 16 de montage.

Le connecteur 16 de montage comporte aussi deux pattes latérales inférieures 34, chacune s'étendant vers le bas depuis une embase supérieure 36 de la partie 33 associée, et qui sont réparties transversalement de part et d'autre du corps 18 de la monture 12, de manière à réaliser le positionnement transversal du connecteur 16 de montage par rapport au corps 18.

L'extrémité inférieure libre 34i de chaque patte latérale 34 est recourbée transversalement vers l'intérieur du connecteur 16 de montage, en constituant un crochet qui s'appuie contre la paroi inférieure horizontale 22 du corps 18. L'extrémité inférieure 34i de chaque patte latérale 34 permet ainsi de réaliser le blocage vertical du connecteur 16 de montage en position montée autour du corps 18.

Chaque embase 36 du connecteur 16 de montage comporte une face 40 longitudinale verticale qui s'étend transversalement en vis-à-vis de la face 40 longitudinale verticale de l'autre embase lorsque les deux parties 33 du connecteur 16 de montage sont reliées entre elles.

De plus, lorsque les deux parties 33 du connecteur 16 de montage sont reliées entre elles, les deux embases 36 forment un organe de connexion sur lequel l'extrémité du bras d'entraînement est montée. Les parois longitudinales verticales externes 42 de chaque embase 36 délimitent alors transversalement cet organe de connexion.

Comme on l'a dit plus haut, les tolérances dimensionnelles de fabrication des parties latérales 33 sont relativement élevées, du fait de leur mode de fabrication par moulage. Par contre les tolérances dimensionnelles de l'extrémité du bras sont plus réduites.

Ainsi, la valeur de la distance transversale entre les parois longitudinales verticales externes 42 des embases 36 peut varier de manière importante, ce qui peut provoquer des problèmes de montage du connecteur sur l'extrémité du bras.

En effet, un jeu transversal réduit est recommandé entre l'extrémité du bras et le connecteur 16 de montage, pour permettre l'articulation du connecteur 16 par rapport à l'extrémité du bras. Aussi, il est possible, lorsque les dimensions des parties latérales 33 sont à leurs dimensions maximales tolérées, que le jeu de montage entre le connecteur 16 et l'extrémité du bras soit nul, ou bien que ce jeu soit trop important.

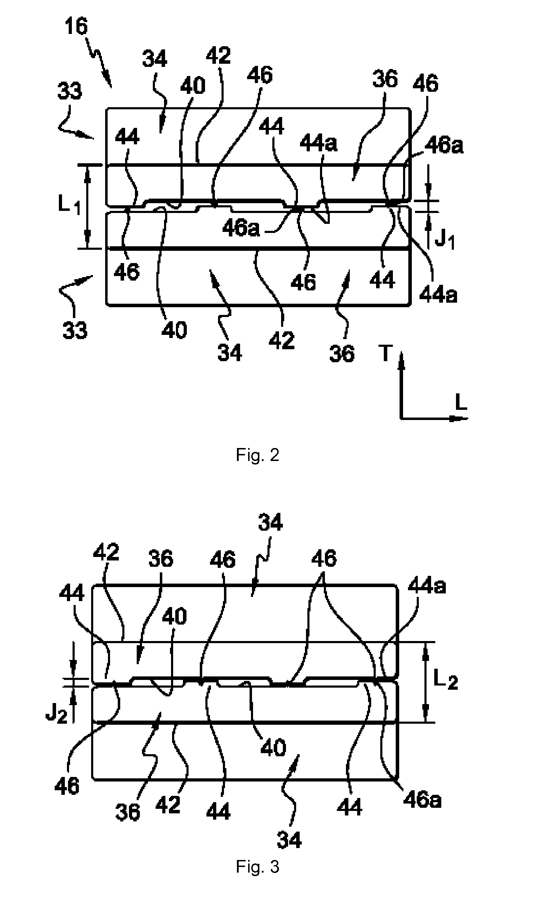

Conformément à l'invention, et comme on peut le voir aux figures 2 et 3, lorsque les deux parties 33 du connecteur 16 de montage sont reliées entre elles, les faces 40 longitudinales verticales des deux embases 36 sont agencées transversalement à distance l'une de l'autre, et le connecteur 16 de montage comporte des moyens permettant de régler la valeur de cette distance transversale, qui sera appelée par la suite jeu transversal, entre les faces 40 longitudinales verticales en vis-à-vis.

Par conséquent, en réglant la valeur du jeu transversal, il est possible de régler la valeur de la distance entre les parois 42 longitudinales verticales externes pour permettre un montage de bonne qualité du connecteur 16 de montage sur l'extrémité du bras d'entraînement.

Pour permettre le réglage de ce jeu transversal, et comme on peut le voir à la figure 1, au moins une première embase 36 comporte au moins un bossage 44 qui fait saillie transversalement par rapport à la face 40 longitudinale verticale de l'embase 36, qui est apte à s'appuyer contre la face 40 longitudinale verticale de l'autre embase et qui est apte à être déformé plastiquement pour permettre un rapprochement des deux faces 40 longitudinales verticales en vis-à-vis.

De plus, la deuxième embase 36 comporte un poinçon 46 qui fait saillie transversalement par rapport à la face 40 longitudinale verticale de cette deuxième embase 36 et qui est apte à coopérer avec le bossage 44 pour provoquer la déformation du bossage 44.

Selon le mode de réalisation représenté aux figures 2 et 3, chaque embase 36 comporte plusieurs bossages 44, ici au nombre de deux, et chaque embase comporte un poinçon 46 associé à chaque bossage 44 de l'autre embase 36, c'est-à-dire ici deux éléments de réglage 46.

Chaque bossage 44 consiste ici en une bande verticale qui s'étend verticalement globalement sur toute la hauteur de la face 40 longitudinale verticale associée et le poinçon 46 forme une nervure verticale dont le bord d'extrémité transversale libre, qui est apte à venir en contact avec le bossage 44 associé, forme une arête vive, comme on peut le voir aux figures 2 et 3.

Le poinçon 46 est ainsi apte à s'enfoncer dans le bossage 44 associé pour le réglage du jeu transversal entre les faces 40 longitudinales verticales.

Ainsi, comme on peut le voir à la figure 2, dans une position initiale d'assemblage des parties 33 du connecteur 16, le bord libre 46a de chaque poinçon 46 est en contact avec la face d'extrémité transversale libre 44a du bossage 44 associé, la valeur du jeu "J1" entre les faces 40 longitudinales verticales est maximal.

La distance transversale "L1" entre les parois 42 longitudinales verticales externes est à sa valeur maximale, dépendant, comme on l'a dit plus haut, des tolérances dimensionnelles de fabrication des deux parties 33 du connecteur 16.

Lorsque la valeur de cette distance transversale "L1" est trop élevée pour permettre un montage correct du connecteur 16 sur l'extrémité du bras d'entraînement, les deux parties 33 sont rapprochées transversalement l'une de l'autre, jusqu'à l'obtention d'une valeur moindre de la distance transversale "L2" permettant le montage du connecteur 16 sur le bras d'entraînement.

Comme on peut le voir à la figure 3, le serrage des parties 33 du connecteur 16 provoque l'enfoncement des éléments de réglage 46 dans les bossages 44 qui, par conséquent, se déforment plastiquement. Le jeu transversal "J2" entre les faces 40 longitudinales verticales est alors lui aussi diminué.

## Revendications

1. Connecteur (16) de montage et d'articulation d'un balai (10) d'essuie-glace d'orientation principale longitudinale sur une extrémité d'un bras d'entraînement du balai (10), le connecteur (16) étant fixé sur le balai (10), et comportant deux parties latérales (33) d'orientation principale longitudinale agencées transversalement de part et d'autre du balai (10), chaque partie latérale (33) comportant une embase (36) supérieure qui est en appui sur une face (24) supérieure du balai (10), une patte latérale (34) inférieure s'étendant verticalement vers le bas depuis l'embase (36) supérieure associée et portant des moyens de fixation du connecteur (16) au balai (10),
chaque embase (36) supérieure comportant une face (40) longitudinale verticale située transversalement en vis-à-vis de la face (40) longitudinale verticale de l'autre embase (36) supérieure,
**caractérisé en ce que** les faces (40) longitudinales verticales en vis-à-vis des deux embases (36) sont situées transversalement à distance l'une de l'autre et **en ce qu'**au moins une première embase (36) comporte des moyens (44, 46) de réglage de la distance transversale (J1, J2) séparant les deux faces (40) longitudinales verticales, qui sont aptes à coopérer avec la deuxième embase (36).

2. Connecteur (16) selon la revendication précédente, **caractérisé en ce que** au moins la première embase (36) comporte au moins un bossage (44) faisant saillie transversalement par rapport à la face (40) longitudinale verticale, qui est apte à s'appuyer transversalement contre la face (40) longitudinale verticale en vis-à-vis de la deuxième embase (36) et qui est apte à être déformé plastiquement pour le réglage de la distance transversale séparant les deux faces (40) longitudinales verticales.

3. Connecteur (16) selon la revendication précédente, **caractérisé en ce que** au moins la deuxième embase (36) comporte un poinçon (46) faisant saillie transversalement par rapport à la face (40) longitudinale verticale, qui est apte à provoquer la déformation plastique dudit bossage (44) de la première embase (36).

4. Connecteur (16) selon la revendication précédente, **caractérisé en ce que** le dit poinçon (46) de la première embase (36) est apte à être introduit transversalement dans le bossage (44) de la deuxième embase (36).

5. Connecteur (16) selon la revendication précédente, **caractérisé en ce que** la première embase (36) comporte une pluralité de bossages (44) répartis sur la face (40) longitudinale verticale et deuxième embase (36) comporte un poinçon (46) associé à chaque bossage (44) de la première embase (36).

6. Connecteur (16) selon l'une des revendications 4 ou 5, **caractérisé en ce que** chaque embase (36) comporte au moins un bossage (44) et au moins un poinçon (46) qui sont aptes à coopérer avec un poinçon (46) et un bossage (44) associés, respectivement, de l'autre embase (36).

7. Connecteur (16) selon l'une quelconque des revendications 2 à 6, **caractérisé en ce que** le bossage (44) forme une bande verticale faisant saillie transversalement par rapport à la face (40) longitudinale verticale associée.

8. Connecteur (16) selon l'une quelconque des revendications 3 à 7, **caractérisé en ce que** le poinçon (46) est en forme d'une nervure verticale faisant saillie transversalement par rapport à la face (40) longitudinale verticale associée, dont le bord vertical d'extrémité transversale libre (46a) forme une arête vive pour permettre à ladite nervure de pénétrer dans le bossage (44) associé.
